Europäisches Patentamt

European Patent Office

Office européen des brevets

(19)

(11) **EP 0 749 524 B1**

(12) **EUROPÄISCHE PATENTSCHRIFT**

(45) Veröffentlichungstag und Bekanntmachung des
Hinweises auf die Patenterteilung:
**06.05.1998 Patentblatt 1998/19**

(21) Anmeldenummer: **95908195.1**

(22) Anmeldetag: **15.02.1995**

(51) Int Cl.6: **F02D 41/14**, F02D 41/36,
F02D 37/02, B60K 28/16,
B60K 41/06

(86) Internationale Anmeldenummer:
**PCT/DE95/00182**

(87) Internationale Veröffentlichungsnummer:
**WO 95/24550 (14.09.1995 Gazette 1995/39)**

(54) **VERFAHREN UND VORRICHTUNG ZUR STEUERUNG EINES FAHRZEUGS**

VEHICLE CONTROL PROCESS AND DEVICE

PROCEDE ET DISPOSITIF DE COMMANDE DE VEHICULES

(84) Benannte Vertragsstaaten:
**DE FR IT SE**

(30) Priorität: **07.03.1994 DE 4407475**

(43) Veröffentlichungstag der Anmeldung:
**27.12.1996 Patentblatt 1996/52**

(73) Patentinhaber: **ROBERT BOSCH GMBH**
**70442 Stuttgart (DE)**

(72) Erfinder: **ZHANG, Hong**
**D-71701 Schwieberdingen (DE)**

(56) Entgegenhaltungen:
**EP-A- 0 315 198        EP-A- 0 386 671**
**EP-A- 0 490 393        EP-A- 0 547 817**
**EP-A- 0 567 177        US-A- 4 721 176**

• **PATENT ABSTRACTS OF JAPAN vol. 13, no. 60**
**(M-796) 10. Februar 1989 & JP,A,63 263 243**
**(MITSUBISHI MOTORS CORP.) 31. Oktober 1988**

**Beschreibung**

Stand der Technik

Die Erfindung betrifft ein Verfahren und eine Vorrichtung zur Steuerung eines Fahrzeugs gemäß den Oberbegriffen der unabhängigen Patentansprüche.

Ein derartiges Verfahren bzw. eine derartige Vorrichtung ist aus der DE 39 38 444 C1 bekannt. Dort wird zur Regelung des Antriebsschlupfes eines Fahrzeugs vorgeschlagen, auf der Basis der Betriebsgrößen des Fahrzeugs bzw. seiner Antriebseinheit das maximal von den angetriebenen Rädern übertragbare Antriebsmoment zu bestimmen und einer zentralen Regeleinrichtung der Brennkraftmaschine zur Einstellung zu übergeben. Geeignete Maßnahmen zur Verarbeitung des zugeführten maximal übertragbaren Antriebsmoments und zur Einstellung des Drehmoments der Antriebsmotors in der zentralen Regeleinrichtung werden nicht angegeben.

Es ist daher Aufgabe der Erfindung, Maßnahmen zur Einstellung des Drehmoment eines Antriebsmotors eines Fahrzeugs durch Beeinflussung von Leistungsparametern des Antriebsmotors wie Kraftstoffzumessung, Gemischzusammensetzung, Zündwinkel und/oder Luftzufuhr bereitzustellen.

Diese Aufgabe wird durch die kennzeichnenden Merkmale der unabhängigen Patentansprüche erreicht.

Aus der nicht vorveröffentlichten deutschen Patentanmeldung DE-P 42 39 711.1 ist die Umsetzung eines Drehmomentensollwertes für einen Antriebsmotor einer Antriebseinheit bei einer Brennkraftmaschine durch Beeinflussung des Zündwinkels, durch Ausblenden bzw. Zuschalten der Kraftstoffzufuhr zu einzelnen Zylindern und/oder durch Beeinflussung der Luftzufuhr zur Brennkraftmaschine bekannt. Eine Variation des Kraftstoff-Luftverhältnisses zur Realisierung einer schnellen Momentenveränderung wird nicht beschrieben.

Gemäß einem weiteren Aspekt der vorliegenden Erfindung sind daher Maßnahmen vorzuschlagen, die ergänzend zu anderen Eingriffsarten eine Variation des Kraftstoff-Luftverhältnisses bei einem Ottomotor zur Realisierung einer schnellen Momentenänderung abhängig von einem Solldrehmoment der Antriebseinheit erlauben.

Aus dem abstract der JP 63 26 32 43 ist bekannt, abhängig vom Radschlupf die Gemischzusammensetzung einer Brennkraftmaschine in Richtung mager zu verändern. Die Vorgabe eines Solldrehmoments und eine daraus abgeleitete Berechnung einer Sollgemischzusammensetzung werden nicht beschrieben.

Die EP 567 177 A1 beschreibt ein Antriebsschlupfregelsystem, bei welchem abhängig von der Abweichung zwischen einem Soll- und einem Istdrehmoment der Brennkraftmaschine eine bestimmte Anzahl von Zylindern ausgeblendet und der Zündwinkel abhängig von der Drehzahl in Richtung spät verstellt wird. Auch hier wird keine Berechnung einer Sollgemischzusammensetzung ausgehend von einem Solldrehmoment beschrieben.

Die EP 547 817 A1 zeigt den Zusammenhang zwischen Gemischzusammensetzung und Motordrehmoment. Zur Drehmomentenreduktion während eines Schaltvorgangs wird vom Getriebesteuergerät eine Zündwinkeländerung im Motorsteuergerät vorgegeben. Die Vorgabe eines Solldrehmoments und die Berechnung einer Sollgemischzusammensetzung unter Berücksichtigung des Istdrehmoments des Motors werden nicht beschrieben.

Vorteile der Erfindung

Die erfindungsgemäße Vorgehensweise erlaubt die Realisierung einer Momentenänderung. Die Veränderung des Kraftstoff-Luftverhältnisses zur Momenteneinstellung wird in vorteilhafter Weise als Ergänzung zur Momenteneinstellung durch Zündwinkelstellung und/oder durch Unterbrechen und Wiederaufnehmen der Kraftstoffzufuhr zu einzelnen Zylindern (Zylinderausblendung) eingesetzt.

Entscheidender Vorteil der erfindungsgemäßen Vorgehensweise ist, daß der Fahrkomfort sich durch feinere, genauere Einstellung des Motormoments erheblich verbessert. Ferner kann durch die Veränderung des Luft-Kraftstoffverhältnisses bei Otto-Motoren im Vergleich zum ausschließlichen Einsatz von Maßnahmen zur Abschaltung der Kraftstoffzufuhr eine Verbesserung der Abgasemission erreicht werden, wobei in vorteilhafter Weise der Schutz von Auslaßventil, Krümmer und Katalysator infolge der teilweise Vermeidung von Kraftstoffabschaltung bzw. Zündwinkel-Spätverstellung vor Übertemperatur gewährleistet ist.

Durch die Synchronisation des Zündungs- und/oder des Einspritzeingriffes mit dem Eingriff in das Luft-Kraftstoffverhältnis wird eine kontinuierliche, komfortable Einstellung des Motordrehmoments ermöglicht.

Weitere Vorteile der Erfindung ergeben sich aus der nachfolgenden Beschreibung von Ausführungsbeispielen bzw. aus den abhängigen Ansprüchen.

Zeichnung

Die Erfindung wird nachstehend anhand der in der Zeichnung dargestellten Ausführungsformen näher erläutert. Dabei zeigt Figur 1 ein Übersichtsblockschaltbild einer Steuervorrichtung für ein Fahrzeug, während in Figur 2 ein Flußdiagramm einer bevorzugten Ausführungsform der erfindungsgemäßen Vorgehensweise dargestellt ist. Figur 3 schließlich zeigt Zeitverläufe von beispielhaften Signalen, an denen die Arbeitsweise der erfindungsgemäßen Vorgehensweise weiter verdeutlicht wird.

Beschreibung von Ausführungsbeispielen

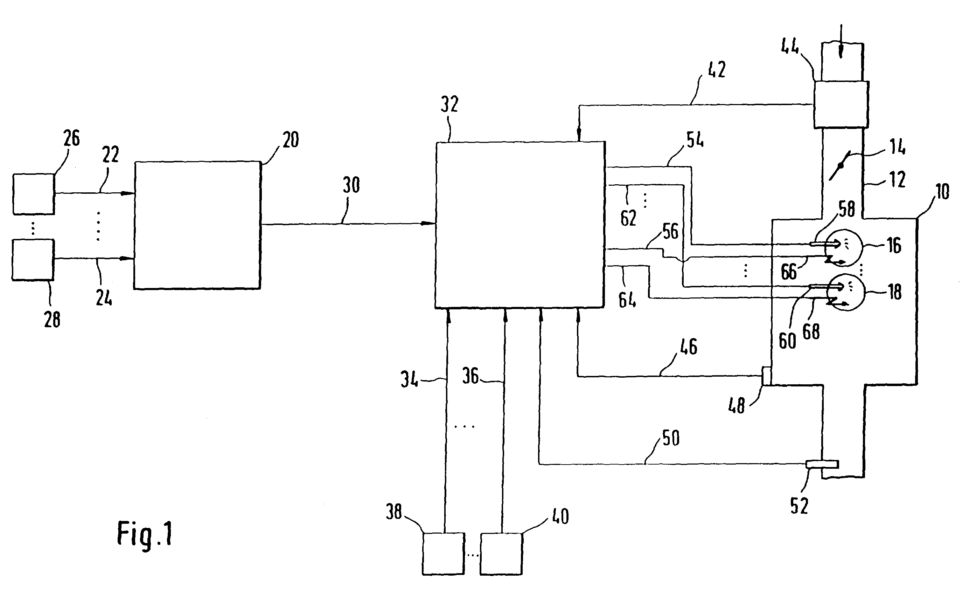

In Figur 1 ist ein Übersichtsblockschaltbild einer Vorrichtung zur Steuerung eines Fahrzeugs mit einer Antriebseinheit 10, einer Brennkraftmaschine gezeigt, welche über ein Luftansaugsystem 12 mit einer vom Fahrer betätigbaren Drosselklappe 14 verfügt. Ferner sind in Figur 1 zwei Zylinder 16 und 18 der vielzylindrigen Brennkraftmaschine 10 (Otto-Motor) dargestellt. Eine erste Steuereinheit 20, welcher die Leitungen 22 bis 24 von Meßeinrichtungen 26 bis 28 zugeführt sind, weist eine Ausgangsleitung 30 auf, die auf eine zweite Steuereinheit 32 führt. Dieser sind fener Eingangsleitungen 34 bis 36 von Meßeinrichtungen 38 bis 40 zugeführt. Der Steuereinheit 32 wird ferner eine Leitung 42 von einer Meßeinrichtung 44 zur Erfassung der Luftzufuhr zur Brennkraftmaschine 10, eine Leitung 46 von einer Meßeinrichtung 48 zur Erfassung der Drehzahl der Brennkraftmaschine sowie eine Leitung 50 von einer Meßeinrichtung 52 zur Erfassung der Abgaszusammensetzung ($\lambda$) der Brennkraftmaschine 10 zugeführt. Ausgangsleitungen 54 bis 56 führen auf Einspritzventile 58 bis 60, wobei jedem Zylinder je ein Einspritzventil zugeordnet ist. Weitere Ausgangsleitungen 62 bis 64 führen auf jedem Zylinder zugeordneten Einrichtungen 66 bis 68 zur Steuerung des Zündzeitpunkts.

Die Funktionsweise der in Figur 1 dargestellten Anordnung wird am Beispiel der Funktion Antriebsschlupfregelung dargestellt. Dabei stellt die Steuereinheit 20 ein Antriebsschlupfregelsystem dar, dem im wesentlichen über die Leitungen 22 bis 24 Signale bezüglich der Umdrehungsgeschwindigkeit der Fahrzeugräder zugeführt werden. Auf der Basis dieser Signalwerte ermittelt die Steuereinheit 20 einen Sollwert für das von der Steuereinheit 32 einzustellende Drehmoment des Antriebsmotors 10. Dieser Sollwert wird von der Steuereinheit 20 über die Leitung 30 zur Steuereinheit 32 abgegeben und von der Steuereinheit 32 unter Verwendung der ihr zugeführten Betriebsgrößen durch Beeinflussung der Kraftstoffzufuhr zu einzelnen Zylindern und/oder durch Beeinflussung des Zündwinkels sowie durch Veränderung der Zusammensetzung des Luft-/Kraftstoffgemisches im Sinne einer Annäherung des von der Brennkraftmaschine 10 abgegebenen Drehmoments an den vorgegebenen Sollwert bereitgestellt.

Neben der beschriebenen Funktion der Steuereinheit 20 kann diese in anderen vorteilhaften Ausführungsbeispielen eine Getriebesteuereinheit sein, welche das vom Antriebstrang abzugebende Abtriebsmoment bestimmt und einen Einstellsollwert für das Drehmoment des Antriebsmotors über die Leitung 30 an die Steuereinheit 32 abgibt. In einem anderen Ausführungsbeispiel kann die Steuereinheit 20 eine übergeordnete Steuereinheit zur gemeinsamen Steuerung wenigstens der Getriebeeinheit und des Antriebsmotors oder eine Einrichtung zur Begrenzung des maximalen Drehmoments, der Fahrgeschwindigkeit oder Drehzahl in einem oder mehreren Betriebszuständen sein.

Der Umsetzung des Sollmomentenwerts durch die Steuereinheit 32 liegen die folgenden grundsätzlichen Zusammenhänge und Erkenntnisse zugrunde. Das durch die Verbrennungsvorgänge in den einzelnen Zylindern erzeugte Drehmoment der Brennkraftmaschine, das indizierte Drehmoment Mi ist im wesentlichen abhängig von der Drehzahl Nmot, der Motorlast Tl (eingestellt durch die Zylinderfüllung), der eingestellten Einspritzzeit Ti sowie des Zündwinkels az. Bei der Bereitstellung des Momentensollwertes durch Beeinflussung des Luft-Kraftstoffverhältnisses, der Kraftstoffzufuhr zu einzelnen Zylindern und des Zündwinkels wird die Einspritzzeit durch den jeweils eingestellten $\lambda$-Wert für die Abgaszusammensetzung und die sogenannte Reduzierstufe XZ beschrieben, welche die Anzahl der ausgeblendeten Zylinder pro Arbeitsspiel der Brennkraftmaschine, das heißt die Anzahl der Zylinder, zu denen die Kraftstoffzufuhr unterbrochen ist, beschreibt. Das indizierte Motormoment kann daher durch folgende Abhängigkeit beschrieben werden:

$$Mi = f(Nmot, Tl, \alpha z, \lambda, XZ) \tag{1}$$

Dabei wird das indizierte Motormoment durch die Steuereinheit 20 als Sollwert vorgegeben. Es besteht demnach die Aufgabe, die Stellgrößen $\alpha z$, $\lambda$ und XZ zu berechnen. Die grundlegende Erkenntnis dabei ist die Aufspaltung der Abhängigkeiten nach Gleichung (1) in Einzelfunktionen nach physikalischen Gesichtspunkten:

$$Mi = f1(Nmot, Tl) * f2 (\Delta \alpha z) * f3(\lambda) * f4(XZ) \tag{2}$$

(mit $\Delta \alpha z = \alpha zopt(Nmot, Tl, \lambda) - \alpha z$ und $f4(XZ) = 1 - XZ/ZZ$ (3))
$\alpha zopt$ ist dabei der auf der Basis von Motordrehzahl, Motorlast und Abgaszusammensetzung für ein maximales Drehmoment bestimmte optimale Zündwinkel, $\alpha z$ der tatsächlich aufgrund des bekannten Drehzahl-Last-Kennfeldes eingestellte Zündwinkel. ZZ ist die maximal mögliche Stufenzahl für die Zylinderausblendung (z.B. im einfachsten Fall bei einem Vierzylindermotor 4).

Die Bestandteile der Gleichung (2) haben physikalische Bedeutungen. f1 entspricht dem indizierten Motormoment bei optimalem Zündwinkel, $\lambda = 1$ (stöchiometrisches Verhältnis) und Kraftstoffzufuhr zu allen Zylindern (XZ = 0). f2 entspricht dem Beitrag der Zündwinkelabweichung bzw. Zündwinkeleinstellung zum Motormoment, d.h. den Beitrag der Abweichung des eingestellten zum optimalen Zündwinkel. f3 bezeichnet den Momentenbeitrag bei verändertem Luft-Kraftstoffverhältnis, wobei die Funktion f3 für $\lambda = 1$ Eins ist. f4 schließlich bezeichnet die Momentenbeiträge durch Ausblenden einzelner Zylinder, wobei diese Funktion 1 ist, wenn kein Zylinder ausgeblendet ist, d.h. allen Zylindern Kraftstoff zugeführt wird.

Die Funktionen f1 bis f4 stellen dabei experimentell bestimmte Kennfelder bzw. Kennlinien dar, in denen abhängig von den bezeichneten Größen der absolute (f1) Momentenwert bzw. die relative Momentenänderung (f2 bis f4) eingetragen ist.

Das Lastsignal Tl wird aus dem Signal eines Hitzdrahtluftmassenmessers, eines Heißfilmluftmassenmessers, eines Suagrohrdrucksensors oder eines Luftmengenmesser unter Berücksichtigung der Motordrehzahl bestimmt.

Zur Berechnung der Stellgrößen $\lambda$soll, $\alpha$zsoll und XZsoll, durch deren Einstellung das Solldrehmoment bereitgestellt wird, kann nach verschiedenen Strategien vorgegangen werden. Im folgenden werden zwei dieser Strategien näher betrachtet, die sich in Ausführungsbeispielen als besonders geeignet erwiesen haben. Eine erste Strategie weist dem Eingriff in das Luft-Kraftstoffverhältnis eine höhere Priorität als dem Eingriff in Kraftstoffzufuhr (Zylinderausblendung) und der Zündwinkelverstellung zu, während eine zweite Strategie der Zylinderausblendung eine höhere Priorität gegenüber dem Eingriff in das Luft-Kraftverhältnis und dem Zündwinkeleingriff zuspricht. In anderen Ausführungen kann jede andere mögliche Prioritätenverteilung gewählt werden.

Dazu muß zunächst das eingestellte Drehmoment Miakt im normalen Betrieb ohne Eingriff bei $\lambda = \lambda 0$, Kennfeldzündwinkel $\alpha z$ und Reduzierstufe XZ 0 (keine Zylinderausblendung) durch eine Abschätzung bestimmt werden:

$$Miakt = f1(Nmot, Tl) * f2(\alpha zopt - \alpha z) * f3(\lambda 0) * f4(0)$$

$$(\text{mit } F3(\lambda 0) = 1 \text{ für } \lambda 0 = 1 \text{ und } F4(0) = 1) \tag{4}$$

Der die Priorität aufweisende und zur Einstellung des Solldrehmoments Misoll notwendige Eingriff in das Luft-Kraftstoffverhältnis ergibt sich unter dann Berücksichtigung von Gleichung (4) durch Auflösen der Gleichung (3) zu:

$$\lambda soll = f3^{-1} [(Misoll * f3(\lambda 0))/Miakt] \tag{5}$$

Weicht demnach der Sollwert für das Drehmoment des Motors vom abgeschätzten Wert ohne Eingriff ab, so wird gemäß der obigen Gleichung ein Sollwert für die Einstellung des Luft/Kraftstoffverhältnisses bestimmt, welcher die Differenz zwischen Sollwert und Istwert ohne Eingriff zumindest verkleinert. Der Sollwert $\lambda$soll darf seinen zulässigen Bereich, der durch eine sichere Befeuerung der Zylinder bestimmt ist, nicht verlassen. Liegt der Sollwert außerhalb dieses zulässigen Bereichs, so wird der Sollwert auf den Minimal- oder Maximalwert beschränkt.

Aus dem gemäß dem Sollwert eingestellten Wert $\lambda$ für das Luft-Kraftstoffverhältnis wird mit Hilfe der Funktion f3 der Momentenbeitrag dieser Verstellung ermittelt und Gleichung 2 zur Bestimmung der Anzahl der auszublendenden Zylinder XZ nach dieser aufgelöst:

$$XZsoll = [1 - Misoll/(Miakt * f3(\lambda)/f3(\lambda 0))] * ZZ. \tag{6}$$

Steht die Zahl der Reduzierstufen fest, so wird auf der Basis der Gleichung 2 die möglicherweise verbleibende Momentendifferenz durch Veränderung des Zündwinkels ausgeglichen. Dabei ist der Einfluß der Verschiebung des Luft-/Kraftstoffverhältnisses auf den optimalen Zündwinkel zu berücksichtigen ($g(\lambda)$), Der einzustellende Zündwinkel azsoll ergibt sich dann als Funktion der eingestellten Reduzierstufe und des Momentensollwertes unter Berücksichtigung des Einflusses des eingestellten Luft/Kraftstoffverhältnisses auf den optimalen Zündwinkel:

$$\alpha zsoll = \alpha zopt(Nmot, Tl) * g(\lambda) - f2^{-1}[Misoll/(f1(Nmot, Tl) *$$

$$f3(\lambda) * f4(XZ))] \tag{7}$$

Durch aufeinanderfolgende Berechnung der Stellgrößen kann somit das Sollmotormoment durch Beeinflussung des Luft/Kraftstoffverhältnisses, der Kraftstoffzufuhr zu einzelnen Zylindern sowie des einzustellenden Zündwinkels eingestellt werden.

Ist in einem Ausführungsbeispiel oder in bestimmten Betriebsphasen und Betriebspunkten (wie im Warmlauf bei kleiner Momentenreduzierung oder Höchstgeschwindigkeitsbegrenzung) keine Unterbrechung der Kraftstoffzufuhr zu einzelnen Zylindern erlaubt, d.h. ist XZSoll immer 0, wird in analoger Weise auf der Basis der obigen Gleichungen ein kombinierter Eingriff in das Luft/Kraftstoffverhältnis und in den Zündwinkel durchgeführt.

Aus den gemessenen oder berechneten Istwerten für den Zündwinkel, die Zylinderausblendung und $\lambda$ wird gemäß Gleichung 2 das Istmotormoment berechnet und gegebenenfalls verarbeitet.

Die Einstellung des Sollwerts für das Luft-/Kraftstoffverhältnis wird in einem bevorzugten Ausführungsbeispiel durch Korrektur der Einspritzzeit Ti durchgeführt.

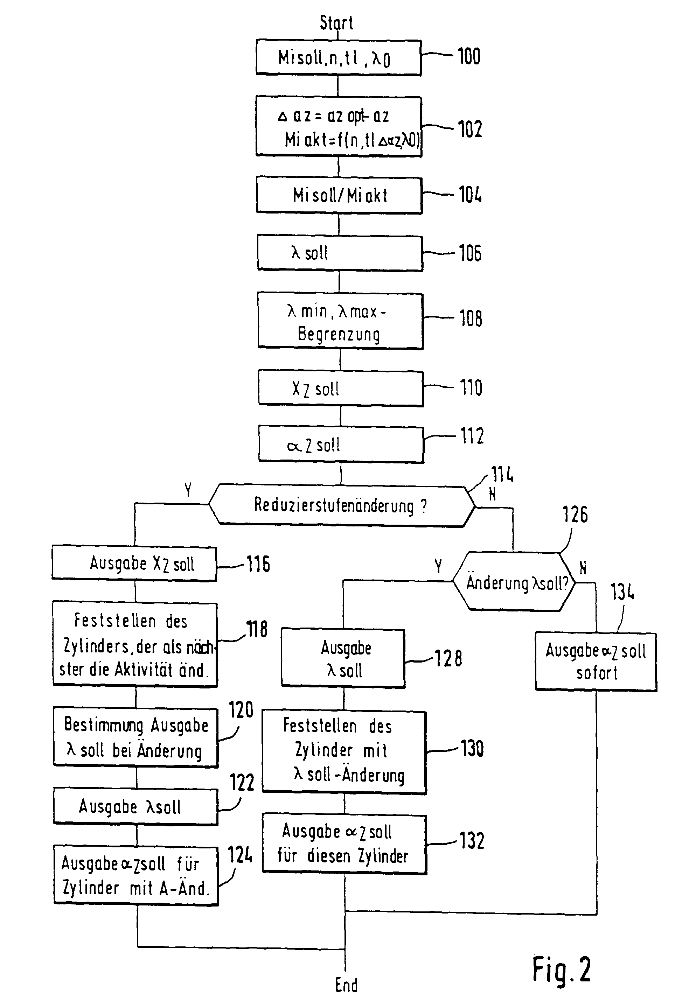

Zur Realisierung der entsprechenden Funktion ist neben den oben dargestellten Grundzusammenhängen das zeitliche Verhalten zu berücksichtigen. Bei Kraftstoffeinspritzsystemen wird im wesentlichen abhängig von Last und Drehzahl der für einen bestimmten Zylinder einzuspritzende Kraftstoff vorgelagert, das heißt er wird einen bestimmten Kurbelwellenwinkel vor dem Ansaugtakt des jeweiligen Zylinders vor das Ansaugventil eingespritzt. Die Berechnung der einzuspritzenden Kraftstoffmenge wird also eine gewisse Zeit vor dem Ansaugen dieser Menge durchgeführt. Sie repräsentiert daher dem beim Ansaugvorgang vorliegenden Betriebszustand nicht mehr exakt. Im Gegensatz dazu wird die Berechnung des Zündwinkels sehr aktuell durchgeführt und unmittelbar vor der Gemischzündung abgeschlossen. Zur Verbesserung des Drehmomentenverlaufs müssen daher die Eingriffe in Zündung und Kraftstoffmenge synchronisiert sein, derart, daß eine Änderung des Zündwinkels erst bei dem Zylinder erfolgt, bei dem eine Änderung der Kraftstoffmenge (im Sinne einer Änderung des Luft-/Kraftstoffverhältnisses oder im Sinne einer Unterbrechung oder Wiederaufnahme der Kraftstoffzufuhr) erfolgt. Eine Realisierung für eine derartige Synchronisation ist am Ausführungsbeispiel mit priorisiertem Luft-/Kraftstoffverhältnis-Eingriff in einem Flußdiagramm nach Figur 2 skizziert.

Nach Start des Programmteils, der kurbelwellen- oder zeitsynchron erfolgt, wird im ersten Schritt 100 der Sollwert für das Motormoment Misoll, die Motordrehzahl Nmot, die Motorlast TI sowie die Abgaszusammensetzung $\lambda 0$ eingelesen. Daraufhin wird im Schritt 102 die Zündwinkeldifferenz $\Delta\alpha z$ zwischen dem optimalen Zündwinkel, welcher abhängig von Motordrehzahl, Motorlast und $\lambda$ aus einem Kennfeld bestimmt wird, und dem aktuell eingestellten Zündwinkel az berechnet. Ferner wird im Schritt 102 das aktuell abgegebene Motormoment ohne Eingriff Miakt aus einem Kennfeld abhängig von der Motordrehzahl, der Motorlast, der Abgaszusammensetzung $\lambda 0$ und der Zündwinkelabweichung abgeschätzt (Gleichung 4). Im darauffolgenden Schritt 104 wird das Verhältnis zwischen dem vorgegebenen Sollmoment und dem abgeschätzten Moment ohne Eingriff berechnet und im darauffolgenden Schritt 106 der Sollwert $\lambda$soll für die Einstellung des Luft/Kraftstoffverhältnis bestimmt (Gleichung 5). Darauf wird $\lambda$soll im Schritt 108 gegebenenfalls auf einen Minimal- bzw. einen Maximalwert begrenzt und im nachfolgenden Schritt 110 auf der Basis des Momentenwerts ohne Eingriff, des einzustellenden Wertes $\lambda$ für das Luft-/Kraftstoffverhältnis und des Sollmomentenwerts wie oben dargestellt die einzustellende Reduzierstufe XZsoll bestimmt (Gleichung 6). Im darauffolgenden Schritt 112 wird der einzustellende Zündwinkel $\alpha$zsoll als Funktion des Sollmomentenwertes, des Momentes bei optimalem Zündwinkel, des Wertes $\lambda$ und der eingestellten Reduzierstufe gemäß obiger Formel (Gleichung 7) bestimmt und im darauffolgenden Abfrageschritt 114 überprüft, ob im Schritt 110 eine Änderung der Reduzierstufe gegenüber dem vorherigen Zustand berechnet wurde.

Ist dies der Fall, wird im Schritt 116 der Sollwert für die Reduzierstufenänderung ausgegeben und im darauffolgenden Schritt 118 der Zylinder festgestellt, der als nächster seine Aktivität ändert, das heißt seinen Zustand vom ausgeschalteten in den wiedereingesetzten bzw. vom befeuerten in den ausgeschalteten Zustand ändert. Danach wird im Schritt 120 der Ausgabezeitpunkt für den Sollwert des Luft-/Kraftstoffverhältnisses bestimmt und dieser zum gegebenen Zeitpunkt gemäß Schritt 122 ausgegeben, d.h. der zu diesem Zeitpunkt für einen Zylinder gebildete Einspritzimpuls entsprechend korrigiert. Der Zeitpunkt wird dabei derart festgelegt, daß infolge der Vorlagerung des Kraftstoffes eine Änderung in der Zusammensetzung des zugeführten Gemisches erst für den Zylinder erfolgt, der gemäß Schritt 118 seine Aktivität ändert bzw. der auf einen solchen Zylinder folgt. Entsprechend wird im Schritt 124 der Zündwinkelsollwert für den Zylinder mit Aktivitätsänderung bzw. für den darauffolgenden Zylinder ausgegeben und der Programmteil beendet.

Wurde im Schritt 114 erkannt, daß keine Änderung der Reduzierstufe errechnet wurde, wird im Abfrageschritt 126 überprüft, ob eine Änderung im Luft-Kraftstoffverhältnis bestimmt wurde. In diesem Fall wird gemäß Schritt 128 der Sollwert $\lambda$soll ausgegeben und im darauffolgenden Schritt 130 ermittelt, welcher Zylinder zuerst mit dem geänderten Luft-/Kraftstoffverhältnis befeuert wird. Die Vorlagerung des Kraftstoffes ist hauptsächlich abhängig von Motordrehzahl und Motorlast, so daß anhand dieser Betriebsdaten der Zeitpunkt festgestellt werden kann. Die Ausgabe des Sollwertes für die Zündwinkeleinstellung erfolgt gemäß Schritt 132 für diesen Zylinder erfolgen. Danach wird der Programmteil beendet.

Wurde im Schritt 126 erkannt, daß keine Änderung im Luft-Kraftstoffverhältnis bestimmt wurde, so wird gemäß Schritt 134 der Sollzündwinkel sofort ausgegeben und der Programmteil beendet.

Zusammenfassend ist festzustellen, daß der Momenteneingriff jeder Stellgröße mit der anderen oder den anderen synchronisiert ist. Dies führt dazu, daß die Momentenänderung insgesamt im wesentlichen zum gleichen Zeitpunkt erfolgt und somit kein unbefriedigender Verlauf des Motormoments stattfindet. Dieser würde folgen, wenn jede Stellgröße sofort zur Wirkung käme und somit die auf jede Stellgröße zurückzuführende Momentenänderung zu unterschiedlichen Zeitpunkten sich ergibt.

Im Ausführungsbeispiel nach Figur 2 wurde der Eingriff in das Luft-Kraftstoffverhältnis mit höchster Priorität versehen. In anderen Ausführungsbeispielen oder im anderen Betriebsphase wie z.B. in Betriebsphasen mit hohen Leistungsanforderungen an den Motor kann es vorteilhaft sein, die höchste Priorität dem Abschalten und Wiedereinsetzen einzelner Zylinder zuzuordnen. In diesem Fall wird anstelle des Schrittes 106 aufgrund des Verhältnisses von Sollmoment zu Moment ohne Eingriff die Sollreduzierstufe XZsoll ermittelt, und dann in den zwei darauffolgenden Schritten λsoll aufgrund des Sollmoments, des abgeschätzten Moments ohne Eingriff und des der einzustellenden Reduzierstufe ermittelt und entsprechend Schritt 108 begrenzt. Der weitere Programmlauf mit Schritt 112 und folgende ist entsprechend anzuwenden.

Wie oben erwähnt handelt es sich bei den Funktionen f2(Δαz), f3(λ) und g(λ) in einem bevorzugten Ausfürhungsbeispiel um experimentell bestimmte Kennfelder bzw. -linien. In einer anderen mathematischen Darstellung in einem anderen vorteilhaften Ausführungsbeispiel handelt es sich um Polynome erster oder/und zweiter Ordnung, oder/und höherer Ordnung wobei die Konstanten des Polynoms von Motordrehzahl und Motorlast abhängig sind.

Neben der bevorzugten Darstellung der Gleichung 2 und 7 als Multiplikation ist eine Aufteilung in Funktionen in Form einer Addition ebenfalls vorteilhaft.

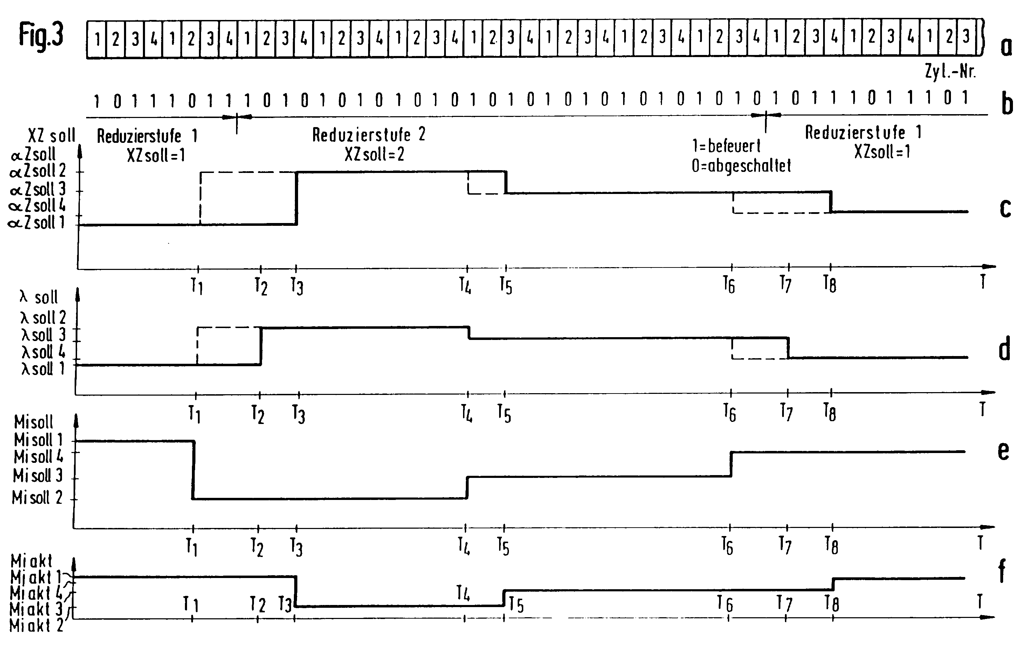

Zur Verdeutlichung der Auswirkungen der erfindungsgemäßen Vorgehensweise sind in Figur 3 typische Zeitverläufe aufgetragen.

In Figur 3a sind die Zylinder eines Vierzylindermotors, in Figur 3b die Aktivitäten dieser Zylinder dargestellt. Dabei bedeutet 1 ein befeuerter Zylinder, 0 ein abgeschalteter Zylinder. Figur 3c zeigt den Verlauf des Zündwinkels, Figur 3d den Verlauf des Luft-/Kraftstoffverhältnisses und Figur 3e den Verlauf des Motorsollmoments. Figur 3f schließlich zeigt den Verlauf des Motormoments selbst. Bei der Darstellung in Figur 3 wurde von einem beispielhaften Betriebszustand ausgegangen, bei welchem der einem Zylinder zugemessene Kraftstoff bereits während des Ansaugtaktes des vorvorhergehenden Zylinders eingespritzt wird. Mit anderen Worten beträgt im beispielhaften Betriebszustand die Vorlagerung des Kraftstoffes eine halbe Nockenwellenumdrehung bzw. eine Kurbelwellenumdrehung.

Bis zu einem Zeitpunkt T1 sei als Sollwert für das Motormoment der Wert Misolll vorgegeben. Dieser wird durch die Reduzierstufe 1, in der der Zylinder 2 ausgeblendet, die anderen Zylinder befeuert werden, durch den Sollzündwinkel azsolll, durch das Luft-/Kraftstoffverhältnis λ1 realisiert. Zum Zeitpunkt T1 andere sich der Sollmotormomentenwert auf den Wert Misoll2. Zur Realisierung dieses Sollmoments wird die Reduzierstufe 2, in der zusätzlich der Zylinder 4 ausgeblendet ist, der Zündwinkel a zsoll2 sowie λ2 zum Zeitpunkt T1 berechnet. Infolge der Vorlagerung des Kraftstoffes wird die Reduzierstufenänderung erst zu einem Zeitpunkt T3, zu dem der neu ausgeblendete Zylinder 4 ansaugt, realisiert. Würde sowohl Zündwinkeländerung als auch die Änderung des Luft-/Kraftstoffverhältnisses zum Zeitpunkt T1 durchgeführt werden, so hätte dies im gezeigten Beispiel zum Zeitpunkt T1 und zum Zeitpunkt T2 einen momentenerhöhenden Effekt zur Folge, da die Änderung im Zündwinkel und im Luft-/Kraftstoffverhältnis die zu große Momentenreduzierung durch Änderung der Reduzierstufe kompensieren. Eine Momentenerhöhung ab dem Zeitpunkt T1 ist unerwünscht, so daß die Realisierung der λ-Änderung und der Zündwinkeländerung verzögert werden. Zum Zeitpunkt T2, wenn der für den neu ausgeblendeten Zylinder 4 einzuspritzende Kraftstoff eingespritzt werden würde, wird daher der berechnete Einspritzimpuls mit λsoll korrigiert. Dies hat zur Folge,, daß ab dem Zylinder 4 nach dem Zeitpunkt T3 ein Luft-/Kraftstoffverhältnis λ2 eingeregelt wird. Zündwinkeländerungen werden sofort wirksam, so daß die Änderung des Zündwinkels auf den Wert αzsoll2 zum Zeitpunkt T3, zu dem der neu ausgeblendete Zylinder 4 ansaugt, durchgeführt wird. Als Ergebnis ergibt sich ab dem Zeitpunkt T3 eine Reduzierung des Motormoments auf den Wert Mi2 gemäß dem vorgegebenen Sollwert, ohne daß vor dem Zeitpunkt T3 eine unerwünschte Erhöhung des Motormoments stattfindet. Die Eingriffe in die Kraftstoffzufuhr, in den Zündwinkel und in das Luft-/Kraftstoffverhältnis sind daher synchronisiert.

Ein weiteres Beispiel zeigt eine Änderung des Motormoments, ohne daß eine Änderung der Reduzierstufe notwendig ist. Zum Zeitpunkt T4 wird das Sollmotormoment vom Wert Misoll2 auf den Wert Misoll3 erhöht. Daher wird zu diesem Zeitpunkt zur Realisierung des Motormoments eine Zündwinkeländerung auf den Wert azsoll3 und eine Änderung des Luft-/Kraftstoffverhältnisses auf den Wert λ3 mit momentreduzierender Wirkung berechnet. Da die Momentenänderung derart gering ist, daß eine Änderung der Reduzierstufe nicht notwendig ist, kann zum Zeitpunkt T4 die λ-Änderung wirksam werden. Der aktuell berechnete Einspritzimpuls wird korrigiert. Im gezeigten Beispiel wird λsoll zum Zeitpunkt T4 während des Ansaugtakts des Zylinders 1 geändert. Diese Änderung wird für den Zylinder 3 wirksam. Aus diesem Grund wird die Änderung des Zündwinkels bis zum Zeitpunkt T5 verzögert, zu dem der Zylinder 3 ansaugt. Ergebnis ist eine Erhöhung des Motormoments zum Zeitpunkt T5 auf den Wert Mi3, ohne daß vor dem Zeitpunkt T5 eine der Erhöhung entgegenwirkende Momentenänderung stattgefunden hat. Der Eingriff in das Luft-/Kraftstoffverhältnis und der Zündwinkeleingriff sind somit synchronisiert.

Zum Zeitpunkt T6 schließlich wird eine weitere Erhöhung des Motorsollmomentenwertes auf den Wert Misoll4 vorgegeben. Wie zum Zeitpunkt T1 führe diese Änderung zu einer Änderung der Reduzierstufe, bei welcher der abgeschaltete Zylinder 4 wieder befeuert wird. Da die Wirkung der Reduzierstufenänderung auf das Motormoment erst zum Zeitpunkt T8, während des Ansaugtaktes des Zylinders 4 erfolgt, werden die Änderungen im Luft-/Kraftstoffverhältnis und des Zündwinkels entsprechend verzögert. Die Änderung im Luft-/Kraftstoffverhältnis erfolgt zum Zeitpunkt T7, wenn der für den Zylinder 4 vorgesehene Kraftstoff eingespritzt wird, während die sofort wirkende Zündwinkeländerung erst zum Zeitpunkt T8 durchgeführt wird. Ergebnis ist eine Änderung des Drehmoments zum Zeitpunkt T8 auf den Wert Mi4. Auch hier sind die drei Stelleingriffe miteinander synchronisiert.

In Figur 3 sind die Wirkungen des Eingriffes in das Luft-/Kraftstoffverhältnis und in den Zündwinkel jeweils gleichsinnig dargestellt. In anderen vorteilhaften Ausführungsbeispielen wirken diese gegensinnig, indem beispielsweise das Ausmaß der Änderung im Luft-/Kraftstoffverhältnis aus Abgasgründen (z.B. Überspringen von Bereichen mit schädlichen Abgasanteilen) so gewählt ist, daß das Motormoment zu weit reduziert wird und durch entsprechende momentenerhöhende Eingriffe in den Zündwinkel kompensiert wird oder umgekehrt. Zusätzlich zu den obigen Eingriffen über Einspritzausblendung, Luft-/Kraftstoffverhältnis und Zündwinkel wird die Realisierung des Sollmomentes durch Beeinflussung der Luftzufuhr, z.B. über eine Drosselklappe oder ein Bypassventil, durchgeführt.

## Patentansprüche

1. Verfahren zur Steuerung der Antriebsleistung eines Fahrzeugs, - wobei abhängig von einem Sollwert (Misoll) für ein von einer Brennkraftmaschine abzugebendes Drehmoment Leistungsparameter der Brennkraftmaschine wie Zündwinkel und/oder Kraftstoffzufuhr zu den Zylindern der Brennkraftmaschine im Sinne einer Annäherung des Istmoments an das Sollmoment eingestellt wird,
dadurch gekennzeichnet, daß

   - aus dem Sollmoment wenigstens ein Sollwert für das einzustellende Luft-/Kraftstoffverhältnis der Brennkraftmaschine (λsoll), für die Einstellung des Zündwinkels (azsoll) und/oder für die Anzahl der auszublendenden Zylinder (XZsoll) bestimmt und durch Steuerung von Luft-Kraftstoffverhältnis, Zündwinkel und/oder durch Ausblenden von Zylindern eingestellt wird,
   - wobei der Bestimmung des wenigstens einen Sollwert wenigstens drei Einzelfunktionen zugrunde liegen, welche dem Beitrag der Zündwinkeleinstellung, dem Beitrag der Einstellung des Luft-/Kraftstoffverhältnisses sowie dem Beitrag der ausgeblendeten Zylinder zum Drehmoment der Brennkraftmaschine entsprechen, wobei zumindest unter bestimmten Betriebsbedingungen eine Ausblendung von Zylindern vorgenommen wird.

2. Verfahren nach Anspruch 1, dadurch gekennzeichnet, daß ausgehend vom Solldrehmoment entsprechende Vorgabewerte zur Steuerung von Luftzufuhr, Kraftstoffzufuhr und Zündung berechnet werden.

3. Verfahren nach Anspruch 1, dadurch gekennzeichnet, daß Beeinflussung von Zündwinkel, Kraftstoffzufuhr und Luft-/Kraftstoffverhältnis miteinander synchronisiert sind derart, daß ihre Wirkungen auf das Drehmoment der Antriebseinheit jeweils für den gleichen ansaugenden Zylinder zum Tragen kommen.

4. Verfahren nach einem der vorhergehenden Ansprüche, dadurch gekennzeichnet, daß der Eingriff in die Kraftstoffzufuhr als Ausblenden der Kraftstoffzufuhr zu einzelnen, vorbestimmten Zylindern und als Verstellung des Luft-/Kraftstoffverhältnis realisiert ist.

5. Verfahren nach einem der vorhergehenden Ansprüche, dadurch gekennzeichnet, daß ausgehend vom Sollwert für das Drehmoment, der Motordrehzahl und der Motorlast, des eingestellten Zündwinkels sowie des eingestellten Luft-/Kraftstoffverhältnisses zunächst ein Sollwert für das Luft-/Kraftstoffverhältnis, dann die Anzahl der auszublendenden Zylinder und dann die Veränderung des Zündwinkels bestimmt wird, derart, daß der Sollwert für das Drehmoment eingestellt wird.

6. Verfahren nach einem der vorhergehenden Ansprüche 1 bis 4 dadurch gekennzeichnet, daß ausgehend vom Sollwert für das Drehmoment, der Motordrehzahl und der Motorlast des eingestellten Zündwinkels sowie des eingestellten Luft-/Kraftstoffverhältnisses zunächst die Anzahl der auszublendenden Zylinder, dann ein Sollwert für das Luft-/Kraftstoffverhältnisses und dann die Zündwinkeländerung bestimmt wird, derart, daß der Sollwert für das Drehmoment eingestellt wird.

7. Verfahren nach einem der vorhergehenden Ansprüche, dadurch gekennzeichnet, daß die Einstellung des Sollwerts für das Luft-/Kraftstoffverhältnis beim Ottomotor durch Korrektur der einzuspritzenden Kraftstoffmenge erfolgt.

**8.** Verfahren nach einem der vorhergehenden Ansprüche, dadurch gekennzeichnet, daß der Sollmomentenwert von einem Steuergerät zur Antriebsschlupfregelung im Falle eines unzulässig hohen Schlupfes an wenigstens einem der Antriebsräder, von einer Getriebesteuereinheit oder einer Einrichtung zur Begrenzung von Drehmoment, Drehzahl oder Fahrgeschwindigkeit bei Überschreiten des Grenzwerts abgegeben wird.

**9.** Verfahren nach einem der vorhergehenden Ansprüche, dadurch gekennzeichnet, daß der Eingriff in das Luft-/Kraftstoffverhältnis und den Zündwinkel vorgenommen wird, wenn der Eingriff in die Kraftstoffzufuhr zu einzelnen Zylindern (Zylinderausblendung) verboten ist.

**10.** Vorrichtung zur Steuerung der Antriebsleistung eines Fahrzeugs,

- mit einer Steuereinheit (32), die einen Sollwert für ein von einer Brennkraftmaschine abzugebendes Drehmoment (Misoll) empfängt,
- und abhängig vom Sollmoment (Misoll) Leistungsparameter der Brennkraftmaschine, wie Zündwinkel und/oder Kraftstoffzufuhr zu den Zylindern der Brennkraftmaschine im Sinne einer Annäherung des Istmoments an das Sollmoment einstellt,

dadurch gekennzeichnet, daß

- die Steuereinheit (32) aus dem Sollmoment wenigstens ein Sollwert für das einzustellende Luft-Kraftstoffverhältnis der Brennkraftmaschine ($\lambda$soll), für die Einstellung des Zündwinkels (azsoll) und/oder für die Anzahl der auszublendenden Zylinder (XZsoll) bestimmt und durch Steuerung von Luft-Kraftstoffverhältnis, Zündwinkel und/oder durch Ausblenden von Zylindern einstellt, wobei der Bestimmung des wenigstens einen Sollwerts wenigstens drei Einzelfunktionen zugrunde liegen, welche dem Beitrag der Zündwinkeleinstellung, dem Beitrag der Einstellung des Luft-/Kraftstoffverhältnisses sowie dem Beitrag der ausgeblendeten Zylinder zum Drehmoment der Brennkraftmaschine entsprechen, wobei zumindest unter bestimmten Betriebsbedingungen eine Ausblendung von Zylindern vorgenommen wird.

**Claims**

**1.** Process for controlling the propulsive power of a vehicle,

- in which power parameters of the internal-combustion engine, such as ignition angle and/or fuel feed to the cylinders of the internal-combustion engine, are adjusted, as a function of a desired value (Mides.) for a torque to be output by an internal-combustion engine, so as to bring the actual moment closer to the desired moment,

characterized in that

- at least one desired value for the air/fuel ratio to be set for the internal-combustion engine ($\lambda$des.), for setting the ignition angle ($\alpha$zdes.) and/or for the number of cylinders to be shut off (XZdes.) is determined from the desired moment and is set by controlling the air/fuel ratio, ignition angle and/or by shutting off cylinders,
- the determination of the at least one desired value being based on at least three individual functions, which correspond to the contribution of the ignition-angle setting, the contribution of the setting of the air/fuel ratio and the contribution of the cylinders shut off to the torque of the internal-combustion engine, cylinders being shut off at least under certain operating conditions.

**2.** Process according to Claim 1, characterized in that on the basis of the desired torque corresponding preset values are calculated for controlling air feed, fuel feed and ignition.

**3.** Process according to Claim 1, characterized in that the adjustment of ignition angle, fuel feed and air/fuel ratio are synchronized with one another in such a manner that their effects on the torque of the propulsive unit in each case come to bear on the same aspirating cylinder.

**4.** Process according to one of the preceding claims, characterized in that acting on the fuel feed is carried out by shutting off the fuel feed to individual, predetermined cylinders and by adjusting the air/fuel ratio.

**5.** Process according to one of the preceding claims, characterized in that, on the basis of the desired value of the torque, of the engine speed and of the engine load, of the set ignition angle and of the set air/fuel ratio, firstly a desired value for the air/fuel ratio and then the number of cylinders to be shut off and then the change to the ignition angle are determined, in such a manner that the desired value for the torque is set.

6.  Process according to one of the preceding Claims 1 to 4, characterized in that, on the basis of the desired value for the torque, of the engine speed and of the engine load, of the set ignition angle and of the set air/fuel ratio, firstly the number of cylinders to be shut off, then a desired value for the air/fuel ratio and then the ignition-angle change are determined, in such a manner that the desired value for the torque is set.

7.  Process according to one of the preceding claims, characterized in that the desired value for the air/fuel ratio in the spark-ignition engine is set by correcting the amount of fuel to be injected.

8.  Process according to one of the preceding claims, characterized in that the desired moment value is output by a control unit for controlling the traction in the event of an impermissibly high slip on at least one of the driving wheels or by a transmission control unit or a device for limiting the torque, rotational speed or driving speed in the event of exceeding the limit value.

9.  Process according to one of the preceding claims, characterized in that the air/fuel ratio and the ignition angle are acted upon when it is forbidden to act on the fuel feed to individual cylinders (cylinder shut-off).

10. Device for controlling the propulsive power of a vehicle,

    -   having a control unit (32), which receives a desired value for a torque (Mides.) to be output by an internal-combustion engine,
    -   and power parameters of the internal-combustion engine, such as ignition angle and/or fuel feed to the cylinders of the internal-combustion engine, are adjusted as a function of the desired moment (Mides.) so as to bring the actual moment closer to the desired moment,

    characterized in that

    -   from the desired moment, the control unit (32) determines at least one desired value for the air/fuel ratio to be set for the internal-combustion engine ($\lambda$des.), for setting the ignition angle (azdes.) and/or for the number of cylinders to be shut off (XZdes.) and sets this at least one desired value by controlling the air/fuel ratio, ignition angle and/or by shutting off cylinders, the determination of the at least one desired value being based on at least three individual functions, which correspond to the contribution of the ignition-angle setting, the contribution of the setting of the air/fuel ratio and the contribution of the cylinders shut off to the torque of the internal-combustion engine, cylinders being shut off at least under certain operating conditions.

**Revendications**

1.  Procédé de commande de la puissance motrice d'un véhicule selon lequel :
    en fonction d'une valeur de consigne (Micons) du couple que doit fournir le moteur à combustion interne, on règle un paramètre de puissance du moteur à combustion interne tel que l'angle de rotation et/ou l'alimentation en carburant des cylindres du moteur dans le sens d'un rapprochement entre la valeur réelle du couple et sa valeur de consigne, caractérisé en ce qu'

    •   à partir du couple de consigne, on définit au moins une valeur de consigne du rapport air/carburant à régler pour le moteur à combustion interne ($\lambda$cons), pour régler l'angle d'allumage (azcons) et/ou pour le nombre de cylindres à couper (XZcons) et on règle par la commande du rapport air/carburant, de l'angle d'allumage et/ou par la coupure des cylindres,
    •   la détermination d'au moins une valeur de consigne repose sur au moins trois fonctions séparées qui correspondent à la contribution du réglage de l'angle d'allumage, à la contribution du réglage du rapport air/carburant ainsi qu'à la contribution des cylindres à couper dans le couple fourni par le moteur à combustion interne, et
    •   au moins dans des conditions de fonctionnement définies, il y a coupure de cylindres.

2.  Procédé selon la revendication 1,
    caractérisé en ce que

partant du couple de consigne, on calcule des valeurs prédéterminées correspondantes pour commander l'alimentation en air, l'alimentation en carburant et l'allumage.

3. Procédé selon la revendication 1,
   caractérisé en ce qu'
   on influence l'angle d'allumage, l'alimentation en carburant et/ou le rapport air/carburant de façon synchronisée pour que les effets sur le couple fourni par le groupe moteur deviennent actifs chaque fois pour les mêmes cylindres en aspiration.

4. Procédé selon l'une des revendications précédentes,
   caractérisé en ce que
   l'intervention sur l'alimentation en carburant consiste à couper l'alimentation en carburant de certains cylindres prédéterminés et à régler le rapport air/carburant.

5. Procédé selon l'une quelconque des revendications précédentes,
   caractérisé en ce qu'
   à partir de la valeur de consigne du couple, de la vitesse de rotation du moteur et de sa charge, de l'angle d'allumage réglé ainsi que du rapport air/carburant réglé, on définit tout d'abord une valeur de consigne du rapport air/carburant, puis le nombre de cylindres à couper, puis la variation de l'angle d'allumage de façon à régler la valeur de consigne pour le couple.

6. Procédé selon l'une quelconque des revendications 1 à 5,
   caractérisé en ce que
   partant de la valeur de consigne du couple, de la vitesse de rotation et de la charge du moteur, de l'angle d'allumage réglé ainsi que du rapport air/carburant, réglé, on détermine tout d'abord le nombre de cylindres à couper, puis une valeur de consigne du rapport air/carburant, puis la variation d'angle d'allumage afin de régler la valeur de consigne pour le couple.

7. Procédé selon l'une des revendications précédentes,
   caractérisé en ce que
   le réglage de la valeur de consigne du rapport air/carburant d'un moteur à essence se fait en corrigeant la quantité de carburant à injecter.

8. Procédé selon l'une quelconque des revendications précédentes,
   caractérisé en ce que
   la valeur de consigne du couple est fournie par l'appareil de commande pour la régulation du patinage à l'entraînement en cas de patinage élevé, inacceptable, sur au moins l'une des roues motrices, par une unité de commande ou par une installation limitant le couple, la vitesse de rotation ou la vitesse de déplacement en cas de dépassement de la valeur limite.

9. Procédé selon l'une des revendications précédentes,
   caractérisé en ce que
   l'intervention sur le rapport air/carburant et l'angle d'allumage sont effectués lorsque l'intervention sur l'alimentation en carburant vers les différents cylindres (coupure des cylindres) est interdite.

10. Dispositif de commande de la puissance motrice d'un véhicule comprenant :

    une unité de commande (32) qui reçoit une valeur de consigne pour un couple que doit fournir le moteur à combustion interne (Micons),
    et en fonction du couple de consigne (Micons), des paramètres de puissance du moteur à combustion interne tels que l'angle d'allumage et/ou l'alimentation en carburant des cylindres du moteur, on règle le couple réel sur le couple de consigne dans le sens d'un rapprochement,

    caractérisé en ce qu'

    - l'unité de commande (32) règle à partir du couple de consigne au moins une valeur de consigne pour le rapport air/carburant à régler sur le moteur à combustion interne ($\lambda$cons), pour le réglage de l'angle d'allumage ($\alpha$zcons) et/ou pour le nombre de cylindres à couper (XZcons) et en commandant le rapport air/carburant, l'angle d'allumage et/ou en coupant des cylindres,

- pour déterminer au moins une valeur de consigne, on utilise au moins trois fonctions séparées correspondant à la contribution du réglage de l'angle d'allumage, à celle du réglage du rapport air/carburant ainsi qu'à la contribution des cylindres à couper au couple du moteur à combustion interne, et
- on effectue une coupure de cylindres au moins dans des conditions de fonctionnement déterminées.

Fig.1

Start

Misoll,n,tl ,λ0 — 100

Δ az = az opt- az
Mi akt=f(n,tl Δαzλ0) — 102

Misoll/Miakt — 104

λ soll — 106

λ min, λmax-
Begrenzung — 108

X z soll — 110

α z soll — 112

Reduzierstufenänderung ? — 114
Y — N

Ausgabe X z soll — 116

Änderung λsoll? — 126
Y — N

Feststellen des
Zylinders, der als näch
ster die Aktivität änd. — 118

Ausgabe
λ soll — 128

Ausgabe α z soll
sofort — 134

Bestimmung Ausgabe
λ soll bei Änderung — 120

Feststellen des
Zylinder mit
λ soll -Änderung — 130

Ausgabe λsoll — 122

Ausgabe α z soll
für Zylinder mit A-Änd. — 124

Ausgabe α z soll
für diesen Zylinder — 132

End

Fig.2

13

Fig.3

Zyl.-Nr.

XZ soll

Reduzierstufe 1
XZsoll=1

Reduzierstufe 2
XZsoll=2

1=befeuert
0=abgeschaltet

Reduzierstufe 1
XZsoll=1

EP 0 749 524 B1

14